# FASCICULE DE BREVET EUROPEEN

(11) **EP 2 388 783 B1**
(45) Date de publication et mention de la délivrance du brevet: **21.02.2018**
(21) Numéro de dépôt: 11166992.5
(22) Date de dépôt: 20.05.2011
(51) Int. Cl.: C04B 28/02, C04B 111/00, C04B 111/62, G21F 9/16, G21F 9/30, G21F 9/36

(54) **Conditionnement de déchets radioactifs en colis de grande dimension durables et confinants**
Verpackung von radioaktivem Abfall in großformatige dauerhafte Sicherheitspakete
Packaging of radioactive waste in large, durable, confining parcels

(30) Priorité: 21.05.2010 FR 1053970
(43) Date de publication de la demande: 23.11.2011
(73) Titulaire: Electricité de France, 75008 Paris (FR)
(72) Inventeur: Bursi, Jean-Michel, 69250 Curis Au Mont D'Or (FR); Jacquemoz, Christian, 13090 Aix En Provence (FR); Lacheny, Pierre, 13100 Aix en Provence (FR); Jeanpierre, Alain, 13770 Venelles (FR); Montel, Laurent, 01800 Saint Jean De Niost (FR)
(74) Mandataire: Cabinet Plasseraud

(56) Documents cités:
- EP-A1- 0 226 880
- EP-A1- 0 248 693
- EP-A1- 0 319 398
- AT-B- 377 505
- DE-A1- 10 028 123
- FR-A1- 2 783 345
- FR-A1- 2 797 519
- US-A- 5 140 165

## Description

### Domaine de l'invention

L'invention concerne le conditionnement de déchets radioactifs, en colis béton durables et confinants. Elle s'applique notamment mais non limitativement au conditionnement des déchets radioactifs de l'industrie nucléaire, aux déchets susceptibles d'être dosants pour l'être humain, par exemple à des matériaux comme le graphite issus du démantèlement des réacteurs dits « UNGG » (pour « Uranium Naturel Graphite Gaz »).

On entend par le terme « confinant » la propriété de confinement de la radioactivité émise par les radionucléides d'un déchet. Le déchet est initialement installé dans un « conteneur » et on entend par le terme « colis », le produit final obtenu lorsqu'un bouchon a été apporté pour sceller le conteneur de déchets. On entend par le terme « enveloppe », les éléments du colis en limite avec l'environnement extérieur, notamment le conteneur et le bouchon rapporté.

### Etat de l'art

Pour ce type de déchets dosants notamment, l'intervention humaine est à éviter (sinon à limiter au minimum) dans le procédé de conditionnement qui consiste à :
- prévoir un conteneur durable et confinant,
- installer un déchet dans le conteneur, et
- couler un matériau durcissant et confinant pour fermer le conteneur par un bouchon constitué de ce matériau durcissant, et former ainsi un colis de stockage durable et confinant du déchet.

En situation normale, le colis de béton doit conserver son intégrité mécanique pour assurer durablement le confinement des déchets. On entend ici par « confinement » le fait que le relargage des radioéléments des déchets soit maîtrisé pour une durée et à un niveau acceptables. Une autre fonction du colis est de limiter le rayonnement extérieur au colis, notamment afin de faciliter sa manutention et son entreposage/stockage.

### Problème posé

L'un des problèmes rencontrés avec ce type de colis concerne notamment la présence possible de vides dans le colis.

Par exemple, l'application d'une matrice cimentaire d'immobilisation des déchets dans un conteneur du type précité doit favoriser la minimisation des vides dans le colis finalement obtenu. La coulée du bouchon définitif sur le matériau d'immobilisation doit aussi limiter le risque de vide apical à cette interface. On indique ici que ces matériaux sont de type béton, mortier, coulis, ou autres.

Des vides dans le colis (par exemple sous un déchet concave) fragilisent au moins mécaniquement le colis et il peut advenir à terme des fissures, ce qui altère ses propriétés de confinement.

Pour éviter la formation de vides dans le colis, il peut être prévu de faire subir au colis, après son remplissage par le matériau cimentaire (mais avant le séchage de ce dernier), des vibrations mécaniques. En pratique, des aiguilles vibrantes, immergées dans le matériau cimentaire peuvent assurer cette fonction. Le positionnement du colis sur une table vibrante peut également satisfaire le même besoin mais pour des colis de petites dimensions. En effet, de tels procédés peuvent difficilement être mis en oeuvre pour des colis de grande taille, par exemple de 10 à 15 m³. Par ailleurs, la mise en vibration du colis ou l'application d'aiguilles vibrantes nécessitent souvent une présence humaine. Ainsi, la coulée du matériau durcissant dans le conteneur sollicite souvent l'intervention d'un opérateur. Or, compte tenu du risque dosimétrique lié au caractère radioactif des déchets, on cherche à éviter tout contact humain avec le colis pendant les phases de sa réalisation.

La présente invention vient améliorer la situation.

### Présentation de l'invention

La présente invention vise à cet effet un procédé de traitement d'un déchet radioactif, comportant les étapes :
a) installer le déchet sensiblement au centre d'un conteneur réalisé dans un matériau confinant les radionucléides, et
b) couler un matériau confinant les radionucléides, durcissant dans le conteneur.

Au sens de l'invention, le déchet radioactif étant dosant, le procédé est télé-opéré et le matériau durcissant de l'étape b) est auto-plaçant.

On entend par le terme « auto-plaçant » le fait que le matériau est suffisamment fluide pour remplir et occuper l'espace de l'intérieur du conteneur (avec le déchet) sans laisser subsister de vides avant de faire prise. Ainsi, il n'est plus nécessaire de manipuler le colis sur une table vibrante ou de manipuler des aiguilles vibrantes avant prise du matériau durcissant. L'intervention humaine n'est plus nécessaire à cet effet et le procédé peut alors être contrôlé à distance (« télé-opéré » comme énoncé ci-avant), de façon avantageuse.

Dans une réalisation, l'étape b) comporte la formation du bouchon du colis. Ainsi, le matériau coulé à l'étape b) et durci dans le conteneur comporte un bouchon du conteneur et préférentiellement le conteneur est réalisé sensiblement dans un même matériau que le bouchon. Une telle caractéristique permet avantageusement d'assurer des propriétés d'homogénéité du colis (homogénéité mécanique et/ou de confinement).

Dans cette réalisation, le matériau du conteneur et du bouchon est un béton durable, confinant, auto-plaçant, qui peut avantageusement être renforcé par une armature ou des fibres de renfort. Ainsi, la résistance mécanique du colis peut être suffisante pour prévoir des dimensions du colis élevées, par exemple de l'ordre de 10 à 20 m³, comme on le verra plus loin. L'intégrité du colis est alors assurée et les effets radiologiques des déchets sont donc maîtrisés.

Toutefois, le procédé au sens de l'invention s'applique aussi à l'utilisation d'un matériau d'immobilisation du déchet dans le conteneur. Dans une telle réalisation, le matériau coulé à l'étape b) et durci dans le conteneur comporte avantageusement un matériau d'immobilisation du déchet et ce matériau est auto-plaçant. En particulier, ce matériau possède aussi la propriété de confinement des radionucléides.

Préférentiellement, l'étape b) comporte alors les opérations :
b1) couler le matériau d'immobilisation auto-plaçant du déchet dans le conteneur,
b2) disposer une armature de renfort au-dessus du matériau d'immobilisation, dans le conteneur,
b3) couler le béton dans son armature de renfort.
Toutes ces étapes peuvent être pilotées à distance, de façon avantageuse.

Il peut se poser aussi le problème, notamment pour des déchets de faible densité, que le déchet remonte en surface lorsqu'il a été immergé dans du matériau d'immobilisation plus dense, coulé à l'étape b). Avantageusement, on prévoit, à l'étape de coulée b), un dispositif de maintien des déchets à l'intérieur du colis, en dessous du niveau prévu pour l'interface entre le bouchon et le matériau d'immobilisation, de manière à ce que les déchets soient globalement enveloppés par une épaisseur minimale satisfaisante de paroi supérieure du colis.

A cet effet, on peut prévoir un dispositif anti-flottaison pour maintenir les déchets à une hauteur choisie pendant la coulée. En pratique, les déchets, placés dans un panier, sont maintenus par un dispositif centreur introduit dans le conteneur et coulés dans le mortier. Le dispositif anti-flottaison peut être rapporté momentanément sur le colis lors de la coulée du matériau d'immobilisation de déchets et jusqu'à la prise de ce matériau. Le dispositif anti-flottaison peut également être placé définitivement dans le colis.

Ainsi, le procédé au sens de l'invention peut avantageusement comporter en outre les opérations :
- prévoir un dispositif anti-flottaison du déchet dans le conteneur,
- installer le déchet dans le conteneur conformément à l'étape a),
- installer le dispositif anti-flottaison dans le conteneur à une hauteur choisie pour permettre une remontée par flottaison du déchet limitée dans le conteneur, pendant l'opération de coulée du matériau d'immobilisation du déchet dans le conteneur, et
- couler le matériau d'immobilisation auto-plaçant du déchet dans le conteneur.

Toutefois, de façon particulièrement avantageuse, on peut en variante tirer partie des propriétés auto-plaçante, voire auto-nivelante, du matériau d'immobilisation coulé à l'étape b), sans nécessairement avoir recours à un dispositif anti-flottaison. A cet effet, le procédé comporte avantageusement les opérations :
- appliquer l'étape a) d'installation du déchet dans le conteneur,
- appliquer une première coulée du matériau d'immobilisation auto-plaçant pour submerger au moins partiellement le déchet,
- après prise de la première coulée du matériau d'immobilisation, appliquer une deuxième coulée du matériau d'immobilisation pour submerger le déchet.

Ainsi, une fois que le matériau premièrement coulé durcit et immobilise les déchets, le procédé peut se poursuivre par une deuxième coulée jusqu'au niveau précité. Le déchet est alors immobilisé dans le matériau coulé en première coulée, sensiblement à mi-hauteur du conteneur, puis en seconde coulée lorsque le colis est terminé par la coulée de l'étape b).

Le matériau d'immobilisation auto-plaçant est avantageusement un mortier confinant les radionucléides. Un exemple de composition d'un tel mortier sera donné plus loin. Avantageusement, le matériau d'immobilisation du déchet auto-plaçant peut être, en outre, auto-nivelant.

La présente invention vise aussi un conteneur de déchet radioactif, réalisé dans un matériau confinant pour la mise en oeuvre du procédé ci-avant. En particulier, le colis formé par la mise en oeuvre du procédé ci-avant doit présenter des parois inférieure et latérales, de propriétés homogènes de celles de sa paroi supérieure, réalisée par coulée du matériau auto-plaçant à l'étape b). Ainsi, le matériau dans lequel est formé le conteneur est aussi auto-plaçant.

Par ailleurs, comme le procédé au sens de l'invention est télé-opéré et ne nécessite pas d'intervention humaine, la dosimétrie radiologique que représente le contenu du colis n'est limitée qu'à une valeur imposée par des réglementations de transport (telles que l'ADR en France) et, de fait, le conteneur peut présenter un volume élevé et stocker une grande masse de déchets. Par exemple, le volume externe du conteneur peut être d'au moins 8 m³. Un conteneur ayant de telles dimensions doit préserver son intégrité mécanique. D'ailleurs, il peut être prévu de stocker les colis dans un concept de stockage en couverture remaniée (sous une hauteur minimale de terre) ou plus en profondeur en couverture intacte « sous colline », les colis étant stockés côte à côte et les uns sur les autres. Avantageusement alors, le matériau confinant dans lequel est réalisé le conteneur est un béton armé et/ou renforcé.

La présente invention vise aussi une matrice cimentaire adaptée en tant que matériau auto-plaçant pour la mise en oeuvre de l'étape b) du procédé au sens de l'invention.

On entend ici par « matrice cimentaire » la matrice dont les constituants sont le ciment (ou plus généralement, le liant hydraulique), les charges fines (de granulométrie inférieure à 80 microns) et sables fins (intervalle granulométrique entre 80 et 500 microns), l'eau et éventuellement les adjuvants.

Relativement à un béton qu'il est nécessaire de vibrer pour être mis en place, la matrice au sens de l'invention comporte des granulats plus fins, au moins un matériau de remplissage de granulométrie au moins aussi fine que celle du ciment de la matrice dans le but d'optimiser le squelette granulaire de la matrice pour conférer à la matrice cimentaire un caractère auto-plaçant. En outre, l'arrangement des granulométries des différents constituants de la matrice formant le squelette granulaire précité est optimisé aussi pour minimiser les vides à plus petite échelle dans la matrice, en conférant alors des propriétés avantageuses d'auto-placement.

La matrice peut être un béton confinant et auto-plaçant comportant une composition du type, en kg/m³ et dans des plages respectives de plus ou moins 5% :
- sable 0/4 : 930,
- graviers-gravillons 4/8 : 720,
- ciment : 400,
- matériau de remplissage calcaire : 220,
- fumées de silice : 40,
- eau : 140 litres.

Une caractéristique avantageuse d'un tel béton est sa quantité de fines (par exemple ciment, fumées de silice, fillers calcaires, cendres volantes) au moins supérieure à 500 kg/m³, un volume de pâte au moins supérieur à 400 l/m³ et un rapport Eau/Liant inférieur à 0,4 assurant alors une fluidité permettant la propriété d'auto-placement et limitant les risques de ségrégation et de ressuage. La formulation donnée ci-avant est avantageuse en outre, pour conférer la propriété de confinement des radionucléides, du fait du choix des granulométries respectives des constituants. A titre d'exemple, un colis d'environ 20 cm d'épaisseur de paroi d'un béton du type précité permet de limiter la diffusion du tritium et, en particulier, de limiter le coefficient de diffusion à l'eau tritiée à une valeur inférieure à 2,8 10⁻¹³ m²/s.

Avantageusement, la matrice comporte en outre des adjuvants à fort pouvoir défloculant pour fluidifier le béton, voire des agents de viscosité pour maîtriser la ségrégation et le ressuage.

A cet effet, la composition du béton peut comporter en outre, par exemple, en kg/m³ et dans des plages respectives de plus ou moins 5% :
- un agent plastifiant : 8,5, et
- un agent de viscosité ou de cohésion : 1,2.

La matrice cimentaire, dans le cas où le matériau coulé à l'étape b) est un mortier, forme alors un mortier confinant et auto-plaçant comportant par exemple une composition du type, en kg/m³ et dans des plages respectives de plus ou moins 5% :
- sable 0/4: 1115,
- ciment : 400,
- matériau de remplissage calcaire : 400,
- fumées de silice : 80,
- eau : 250 litres.

Là encore, il est avantageux de prévoir des adjuvants dans la matrice et la composition du mortier d'immobilisation du déchet comporte en outre, par exemple, en kg/m³ et dans des plages respectives de plus ou moins 5% :
- un agent plastifiant liquide : 7,4, et
- un agent liquide de viscosité ou de cohésion : 2,5.

Un tel mortier forme avantageusement alors un matériau d'immobilisation du déchet pour la mise en oeuvre du procédé selon l'invention.

Ces matrices cimentaires (béton ou mortier précités) sont avantageux en tant que tels et peuvent faire l'objet d'une protection séparée, indépendamment du procédé ci-avant, dès lors qu'ils possèdent des propriétés à la fois de confinement des radionucléides et d'auto-placement.

La présente invention vise aussi une installation pour la mise en oeuvre du procédé ci-avant, avantageusement automatisée, et comportant à cet effet :
- des moyens d'acheminement du déchet dans un panier sensiblement au centre du conteneur,
- des moyens automatisés de coulée d'un matériau d'immobilisation dans le conteneur pendant une durée prédéterminée et avec au moins une durée d'attente de prise prédéterminée, et
- des moyens automatisés de coulée d'un bouchon fermant le conteneur, pendant une durée prédéterminée et avec au moins une durée d'attente de prise prédéterminée.

Avantageusement, elle peut comporter en outre des moyens de contrôle dosimétrique et de contamination surfacique sur un colis sensiblement parallélépipédique, comme on le verra dans les exemples de réalisation décrits ci-après.

Pour la coulée du matériau d'immobilisation en particulier, des cannes d'injection de matrice cimentaire remplissant le conteneur du bas vers le haut peuvent être utilisées.

On peut prévoir en outre, à l'étape b), la mise en oeuvre d'un coulis durcissant par exemple pour immobiliser les déchets dans le conteneur, ou encore niveler et/ou combler des dépressions de mortier, ou autre. A cet effet, les compositions présentées ci-avant peuvent être fluidifiées davantage et, à titre d'exemple ayant donné des résultats satisfaisants, le coulis peut avoir une composition de type, en kg/m³ et dans des plages de valeurs respectives de plus ou moins 5% :
- matériau de remplissage siliceux : 710,
- ciment : 380,
- fumées de silice : 70,
- eau : 570 litres,
- agent plastifiant liquide : 6.

### Présentation brève des dessins

D'autres caractéristiques et avantages de l'invention apparaîtront à l'examen de la description détaillée ci-après, et des dessins annexés sur lesquels :
- la figure 1 illustre un conteneur 1 de déchet au sens de l'invention ;
- la figure 2 illustre la coulée de mortier dans le conteneur ;
- la figure 3 illustre le colis rempli de mortier 4 ; et
- la figure 4 illustre la fermeture du colis par le bouchon 6.

### Description détaillée

La présente invention trouve une application dans le conditionnement de déchets radioactifs issus de l'industrie nucléaire en vue de leur entreposage et/ou stockage définitif, par exemple dans le cadre du démantèlement de réacteurs nucléaires ou de silos, générant des déchets nucléaires parmi lesquels des déchets graphite (pouvant aller jusqu'à quelques dizaines de milliers de tonnes de déchets graphite) classés comme étant du type « faiblement actif à vie longue » (FA-VL). Selon un avantage que procure la présente invention, de tels déchets peuvent être conditionnés en colis d'entreposage et/ou de stockage constitués de béton durable et confinant. D'après les essais réalisés, le colis au sens de l'invention convient ainsi, notamment pour une telle application.

On entend dans la présente description par le terme « confinant » le fait que le matériau est suffisamment imperméable aux éléments radioactifs ou en tout cas réduit suffisamment leur diffusion. Les performances de confinement de conteneurs en béton peuvent être définies au sens des exigences de l'Agence nationale pour la gestion des déchets radioactifs, ANDRA (référence ACO.SP.ASRE.99.004.B). En particulier ces performances peuvent être par exemple évaluées en mesurant un coefficient de diffusion d'eau tritiée, contenant donc du tritium radioactif.

L'ANDRA impose comme critère de confinement pour les conteneurs de stockage de déchets faiblement ou moyennement radioactifs à vie courte un coefficient de diffusion d'eau tritiée (en m².s⁻¹) inférieur à, ou de l'ordre de, 1,7.10⁻¹² fois une épaisseur de confinement. L'épaisseur de confinement peut être en particulier l'épaisseur d'une paroi du conteneur. Elle peut être aussi, dans le cas d'un remplissage de conteneur ou l'épaisseur de matériau ayant servi à remplir le conteneur et séparant les déchets et un environnement extérieur.

Par exemple si le conteneur a une paroi d'environ 16 cm d'épaisseur, le matériau du conteneur doit avoir un coefficient de diffusion inférieur à 2,8.10⁻¹³ m².s⁻¹ pour satisfaire au critère de confinement imposé par l'ANDRA.

Le terme « confinant » appliqué aux matériaux et conteneurs selon une telle définition possible signifie que le coefficient de diffusion de l'eau tritiée pour ces matériaux et conteneurs correspond par exemple au critère de confinement imposé par l'ANDRA. En particulier, pour des applications visant à stocker des déchets faiblement ou moyennement radioactifs à vie courte, cela signifie que les matériaux considérés comme confinant ont un coefficient de diffusion d'eau tritiée au moins inférieur à 1,70.10⁻¹² fois l'épaisseur de paroi.

Les essais ont montré aussi qu'un colis au sens de la présente invention permettait en outre l'entreposage et/ou le stockage de déchets « faiblement ou moyennement actif à vie courte » (FMA-VC).

Par ailleurs, alors que les déchets radioactifs sont habituellement conditionnés dans un colis de volume hors tout de l'ordre de 2 m³ pour une masse de 5 à 6 tonnes, ou, au mieux, de 5 m³ pour une douzaine de tonnes, le colis en béton au sens de l'invention présente un volume hors tout de l'ordre de 8 à 13 m³ pour 20 à 35 tonnes. Des colis de volume inférieur sont tout à fait réalisables mais possiblement aussi des colis jusqu'à 20 m³ (2m x 2m x 5m). Des colis plus volumineux permettent avantageusement de limiter le pré-découpage des déchets volumineux (en assurant alors une dispersion limitée de la radioactivité) et d'optimiser en outre le volume ainsi conditionné.

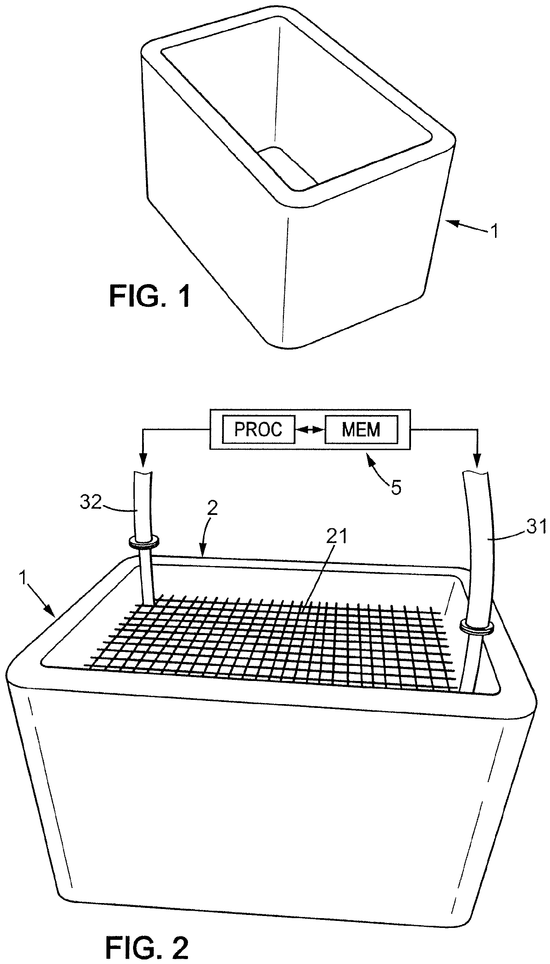

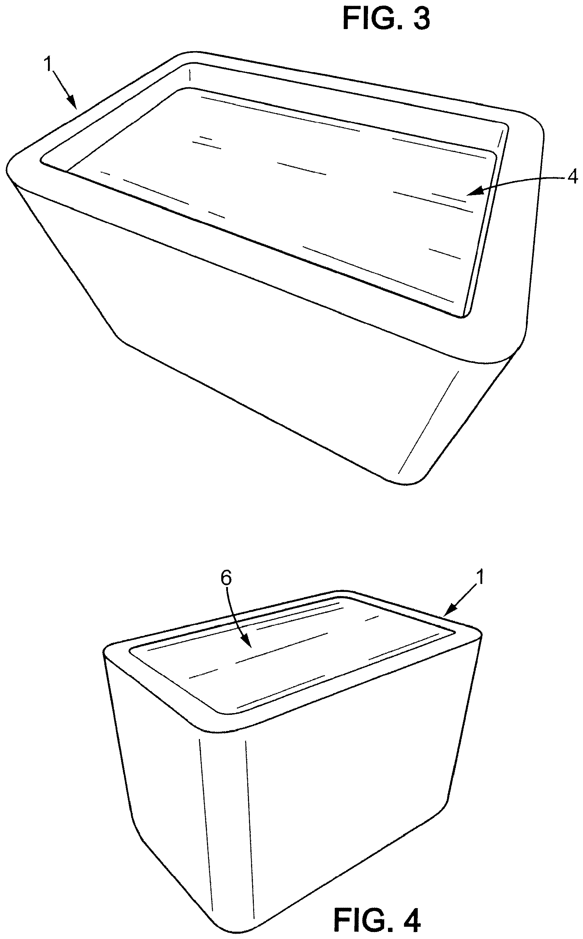

En particulier, dans une mise en oeuvre avantageuse de l'invention, on prévoit un colis en béton durable armé et/ou fibré, auto-plaçant pour éviter la nécessité d'être vibré avant la prise. En référence aux dessins annexés, les déchets composés de graphite sont déposés dans le conteneur 1 (figure 1) et sont immobilisés par un matériau d'immobilisation (avantageusement un micro-mortier auto-plaçant), injecté par les buses 31 et 32 sur la figure 2 et qui recouvre, après sa prise, le déchet, comme représenté sur la figure 3 sous la référence 4. Ce micro-mortier 4 a des propriétés de confinement dans une réalisation avantageuse. Le colis est finalement fermé par un bouchon (couvercle) en béton 6 (figure 4) du même type que celui du conteneur 1. Le couvercle peut être coulé après prise du matériau 4 d'immobilisation des déchets.

Les essais ont montré qu'il était possible de concevoir un colis de stockage de déchets, notamment de graphite, d'un volume d'au moins 9 m³. Plus précisément, le conteneur représenté sur la figure 1 fait, dans un exemple de réalisation, 1,80 m de hauteur, 1,90 m de largeur et 2,7 m de longueur (et possiblement jusqu'à 5 m de longueur). L'épaisseur des voiles du conteneur peut être de l'ordre de 20 cm (et possiblement jusqu'à au moins 30 cm). Le déchet peut être disposé sous un dispositif anti-flottaison 2 comportant une grille rigide 21 fixée à l'intérieur du conteneur. Le déchet est alors maintenu dans le conteneur, sous la grille 21.

Ici encore, le mortier injecté par les buses 32 et 31 est préférentiellement auto-plaçant pour éviter de prévoir un dispositif de mise en vibration du colis, notamment. Le mortier remplit les vides entre les déchets du bas vers le haut. La durée, la vitesse et finalement la quantité injectée par les buses peuvent être pilotées par des moyens automatisés 5 à distance, à l'aide d'un ordinateur programmé comportant typiquement un processeur PROC, une mémoire de travail MEM et assisté préférentiellement par des caméras vidéos. Finalement, en référence à la figure 3, une fois le mortier coulé 4 et avant son durcissement, une armature métallique est disposée au dessus du mortier et le bouchon 6 du conteneur 1 peut être coulé pour sceller le colis (figure 4). L'armature métallique permet alors de renforcer le béton (béton armé) du bouchon 6. Ce béton peut, en complément ou en variante, comporter des fibres de renfort (métalliques aussi).

En variante, il peut être prévu de remplir à mi-hauteur le conteneur avec le déchet à l'intérieur, par du mortier, sans dispositif d'immobilisation anti-flottaison, attendre la prise du mortier, puis couler à nouveau du mortier jusqu'à remplir le conteneur comme représenté sur la figure 3. Cette variante permet d'éviter l'utilisation d'un dispositif anti-flottaison rapporté. L'usage d'un mortier auto-nivelant 4 ou autre matériau d'immobilisation est également envisageable dans une telle réalisation.

Une autre variante encore consiste à placer sur le panier de déchets une grille anti-flottaison des déchets, fixée à demeure dans le colis.

Après prise du bouchon définitif, un dispositif équipé de sondes (non représentées) vient mesurer ensuite la dosimétrie, vérifier son homogénéité surfacique (par balayage rectiligne sur les surfaces du parallélépipède que forme le colis), et, en particulier, que sa contamination surfacique ne dépasse pas un seuil prédéterminé, localement.

Comme indiqué ci-avant, les essais ont montré qu'il était possible de concevoir et réaliser un colis d'entreposage et/ou de stockage, en béton durable et confinant, d'un volume d'au moins 9 m³ et pour une masse approximative de 22 tonnes, tout en respectant les exigences réglementaires et les normes en matière de gestion et de stockage de surface des déchets radioactifs, « ces règles et normes portant sur les matériaux et matériels associés au domaine de l'entreposage et/ou de stockage des déchets nucléaires ».

On décrit ci-après quelques unes de ces exigences, à titre d'exemple illustratif, en considérant bien entendu qu'il s'agit d'exigences *a minima* imposées notamment en France par l'ANDRA (« Agence Nationale pour la gestion des Déchets Radioactifs »). On notera par exemple pour le béton du conteneur, une résistance en traction par fendage, mesurée à 90 jours au moins supérieure à 4,5 MPa.

Plus particulièrement, un critère de tenue mécanique est requis. Plus exactement, deux critères sont habituellement requis : un critère de tenue mécanique statique et un critère de tenue mécanique à la chute.

Pour ce qui concerne en particulier le critère de tenue statique, le corps du conteneur doit supporter son propre poids (masse avoisinant 24 tonnes dans l'exemple d'un colis de plus de 10 m³), par ses quatre coins inférieurs, en phase de manutention, posé directement sur une surface plane ou posé sur un cadre au droit des voiles verticaux.

Le corps de conteneur doit tenir au remplissage lors de la coulée du matériau d'immobilisation des déchets.

La tenue mécanique du conteneur aux propriétés exothermiques du matériau d'immobilisation lors de sa mise en oeuvre (en particulier pour un volume du matériau de blocage de plusieurs m³) doit être assurée.

Par ailleurs, en phase d'entreposage, les colis doivent tenir au gerbage.

En situation de stockage, les colis, disposés les uns sur les autres, sont dimensionnés pour tenir :
- au gerbage sur cinq niveaux avec remplissage en béton des espaces entre les colis (reprise latérale sur les voiles (parois) verticaux des colis), considérant une excentration de la colonne de colis sur un colis basal de 5 cm selon les deux axes perpendiculaires du colis dans un même plan horizontal,
- à un poids de terre recouvrant les colis correspondant à une épaisseur de 15 mètres au dessus du colis le plus haut, majoré de 50% (en prenant une masse volumique de terre de 2 tonnes/m³).

En outre, les exigences élevées en matière de tenue mécanique des colis aux chargements statiques et dynamiques (corrélées au volume de colis au sens de l'invention) nécessitent des bétons de hautes performances, a minima de 90 MPa en compression et de 8 MPa en traction par flexion à 28 jours. Ces bétons facilitent en outre la fabrication des conteneurs en usine conventionnelle, ainsi que les opérations de fermeture des bouchons définitifs des colis en conditions télé-opérées (en utilisant typiquement les moyens automatisés ou commandables à distance, portant la référence 5 sur la figure 2). Un avantage des bétons au sens de l'invention consiste alors en leurs propriétés d'auto-placement.

Le béton utilisé pour le conteneur 1 et le bouchon 6 doit respecter en outre les propriétés de confinement requises. A cet effet, un béton utilisé par exemple dans le document FR-2,763,584 a été adapté ici pour être rendu auto-plaçant. Le caractère auto-plaçant du béton au sens de l'invention signifie que sa vibration n'est pas nécessaire pour garantir le remplissage du moule et l'enrobage des éventuelles armatures, avec un taux d'air occlus du béton qui reste acceptable.

Les éléments constitutifs du béton qui intéressent l'invention sont liés aux caractéristiques physico-chimiques des constituants (ciment, fines, sables et granulats), en particulier une granulométrie plus fine et des caractéristiques évacuant les risques de pathologies connues des bétons sur le long terme.

Un exemple de proportions des constituants de la formulation de ce béton est donné ci-après :
- 29% d'une matrice comprenant un liant hydraulique (en quantité et qualité optimale pour limiter l'exothermie), à laquelle s'ajoute du matériau de remplissage calcaire ou « filler » (roche broyée silice ou calcaire) et de la fumée de silice, cette proportion étant fonction de la granulométrie maximale du gravier ou du gravillon que comporte le béton,
- 31% de gravillons, avec une granulométrie maximale variant de 6 à 12 mm, la proportion étant liée notamment à la géométrie des constituants qui peuvent être plus ou moins arrondis,
- 40% de sable, cette proportion étant notamment fonction de la granulométrie maximale du gravillon et de la quantité de liant hydraulique.

Ces proportions respectives peuvent varier en fonction des matériaux et sont définies par des essais rhéologiques (par exemple mesure d'étalement au cône d'Abrams devant être supérieure à un diamètre moyen de 600 mm pour garantir le caractère auto-plaçant avec de préférence une valeur proche de 700 mm et qui peut aller jusqu'à 850 mm).

Ces proportions s'additionnent à :
- 138 l/m³ d'eau et d'au moins un adjuvant de type superplastifiant et haut réducteur d'eau, le dosage en eau étant fonction de la géométrie des granulats et de leur absorption.

La formule ci-avant est équilibrée en qualité et quantité des constituants pour ne pas présenter de risques de réactions de gonflement interne du béton (réaction alcali-granulats, réaction sulfatique interne liée à l'exothermie). Le liant hydraulique est principalement du ciment qui peut être partiellement remplacé par des additions telles que du laitier moulu, des cendres volantes, des méta-kaolins ou autres.

Le filler n'a pas obligatoirement des propriétés élevées d'hydraulicité ou de pouzzolanicité. Sa nature minéralogique peut être majoritairement siliceuse ou calcaire. Il peut inclure des cendres volantes. Son dosage est fonction des autres constituants du liant hydraulique. Sa constitution peut être définie par des essais rhéologiques du type mesure d'étalement, permettant également un choix quant à sa finesse par sa surface spécifique.

Le sable est constitué d'une ou plusieurs fractions avec un étagement choisi de sa granulométrie.

Les adjuvants peuvent être employés pour orienter les performances rhéologiques, physiques et mécaniques. Leur dosage est variable suivant la nature des constituants du béton.

Des agents viscosants ou de cohésion peuvent être avantageusement utilisés, leur proportion étant liée à leur performance et relevant d'essais rhéologiques et physiques définis dans des recommandations et la littérature sur les bétons auto-plaçants.

Des fibres synthétiques, minérales ou métalliques, peuvent être incorporées pour renforcer le béton. Les gains attendus concernent notamment la diminution du retrait et de la ségrégabilité, ainsi, bien entendu, que les performances mécaniques obtenues et la diminution/suppression des armatures traditionnelles.

Pour limiter les variations dimensionnelles du béton, des compensateurs de retrait provoquant une expansion contrôlée peuvent être ajoutés en proportion, en fonction de leur nature.

Pour diminuer encore le retrait, des agents rétenteurs d'eau ou du type réducteur de retrait, par exemple de la famille des glycols, ou autres, sont utilisables.

Ainsi, un exemple de formule de béton pour le conteneur et le bouchon, en kg/m³, est comme suit :
- gravillon (4/8) : 722
- sable (0/4) : 926
- ciment : 400
- filler calcaire : 220
- fumées de silice : 40
- eau totale : 138
- superplastifiant : 8,5
- agent de viscosité ou de cohésion: 1,2

Les exigences réglementaires en cours ou à venir en matière de stockage stipulent en outre une robustesse du colis. Il est possible de prévoir ici des armatures métalliques rigidifiant l'enveloppe externe du colis. En variante, un béton à fibres de renfort peut aussi être prévu.

Un béton fibré et auto-plaçant répondant aux mêmes exigences que le béton décrit ci-avant mais dont la mise en oeuvre de l'enveloppe du colis (conteneur et bouchon définitif) nécessite moins ou pas d'armature, possède des propriétés de robustesse liées aux caractéristiques des fibres, en termes de géométries, à leur matière (par exemple métallique) et à leur dosage dans le béton.

Un exemple de proportions des constituants de la formulation de ce béton est donné ci-après. Il s'agit d'une formulation proche de celle donnée ci-avant, modifiée néanmoins par le dosage en eau qui est de 145 kg/m³ et l'ajout de fibres métalliques à raison de 85 kg/m³, comme suit, en kg/m³ :
- gravillon (4/8) : 650
- sable (0/4) : 926
- ciment : 400
- filler calcaire : 220
- fumées de silice : 40
- eau totale : 145
- superplastifiant : 9
- agent de viscosité ou de cohésion : 1,2
- fibres : 85

Le mortier coulé dans le conteneur est utilisé pour ses propriétés d'immobilisation (rhéologie apte à remplir les vides, tenue mécanique, ou autre). Il possède aussi des propriétés de confinement. Il s'agit préférentiellement d'un micro-mortier auto-plaçant qui présente en outre la particularité d'un niveau exothermique faible, compte tenu du volume à remplir dans le colis (par exemple 2 à 4 m³), permettant d'éviter les dégradations liées au dégagement de chaleur sur le conteneur en phase de prise et durcissement. Les éléments constitutifs de ce mortier, en proportions des constituants, sont du type ci-après, en kg/m³ :
- sable (0/4) : 1115
- ciment : 400
- filler calcaire : 400
- fumées de silice : 80
- eau totale : 250
- superplastifiant : 7,4
- agent de viscosité ou de cohésion : 2,5

La mise en oeuvre d'un coulis durcissant peut être prévue en plus de l'injection du mortier, avec une composition de type, en kg/m³ :
- filler siliceux : 710
- ciment : 380
- fumées de silice : 70
- eau totale : 575
- superplastifiant liquide : 6
- retardateur : 0,66

Bien entendu, la présente invention ne se limite pas à la forme de réalisation décrite ci-avant à titre d'exemple ; elle s'étend à d'autres variantes.

Ainsi, on comprendra par exemple que les exigences présentées ci-avant sont susceptibles bien entendu d'évolutions et, de fait, de variantes.

En outre, on a décrit ci-avant des formulations possibles de matrices cimentaires (béton, mortier, coulis) convenant pour la mise en oeuvre de l'invention, en particulier pour leur caractère auto-plaçant et/ou confinant et/ou auto-nivelant. Bien entendu, ces formulations peuvent faire l'objet de variantes, notamment selon les exigences précitées.

On a représenté aussi en référence aux figures des colis de section sensiblement rectangulaire. D'autres formes sont possibles, en particulier pour optimiser leur stockage, par exemple parallélépipédique hexagonale.

Bien entendu, la présente invention ne se limite pas aux volumes de colis annoncés précédemment à titre d'exemple. Toutefois, elle permet avantageusement la conception de colis de volumes supérieurs aux colis de 2 et 5 m³ de l'art antérieur, ces derniers étant d'ailleurs pour certains de section circulaire, ce qui n'optimise d'ailleurs pas leur stockage.

## Revendications

1. Procédé de traitement d'un déchet radioactif, comportant les étapes :
a) installer le déchet sensiblement au centre d'un conteneur réalisé dans un matériau confinant les radionucléides, et
b) couler un matériau confinant les radionucléides, durcissant dans le conteneur, **caractérisé en ce que**, le déchet radioactif étant dosant, le procédé est télé-opéré, et **en ce que** le matériau durcissant de l'étape b) est auto-plaçant.

2. Procédé selon la revendication 1, **caractérisé en ce que** le matériau coulé à l'étape b) et durci dans le conteneur comporte un bouchon du conteneur, et **en ce que** le conteneur est réalisé sensiblement dans un même matériau que le bouchon.

3. Procédé selon la revendication 2, **caractérisé en ce que** le matériau du conteneur et du bouchon est du béton confinant, auto-plaçant.

4. Procédé selon la revendication 3, **caractérisé en ce que** ledit béton est renforcé.

5. Procédé selon l'une des revendications précédentes, **caractérisé en ce que** le matériau coulé à l'étape b) et durci dans le conteneur comporte un matériau d'immobilisation du déchet, auto-plaçant.

6. Procédé selon la revendication 5, prise en combinaison avec la revendication 4, **caractérisé en ce que** l'étape b) comporte les opérations :
b1) couler le matériau d'immobilisation auto-plaçant du déchet dans le conteneur,
b2) disposer une armature de renfort au-dessus du matériau d'immobilisation, dans le conteneur,
b3) couler le béton dans son armature de renfort.

7. Procédé selon l'une des revendications 5 et 6, **caractérisé en ce qu'**il comporte les opérations :
- prévoir un dispositif anti-flottaison du déchet dans le conteneur,
- l'étape a) d'installation du déchet dans le conteneur,
- installer le dispositif anti-flottaison dans le conteneur à une hauteur choisie pour permettre une remontée par flottaison du déchet limitée dans le conteneur, pendant l'opération de coulée du matériau d'immobilisation du déchet dans le conteneur, et
- couler le matériau d'immobilisation auto-plaçant du déchet dans le conteneur.

8. Procédé selon l'une des revendications 5 et 6, **caractérisé en ce qu'**il comporte les opérations :
- appliquer l'étape a) d'installation du déchet dans le conteneur,
- appliquer une première coulée du matériau d'immobilisation auto-plaçant pour submerger au moins partiellement le déchet,
- après prise de la première coulée du matériau d'immobilisation, appliquer une deuxième coulée du matériau d'immobilisation pour submerger le déchet.

9. Procédé selon l'une des revendications 5 à 8, **caractérisé en ce que** le matériau d'immobilisation auto-plaçant est un mortier confinant les radionucléides.

10. Procédé selon l'une des revendications 5 à 9, **caractérisé en ce que** le matériau d'immobilisation auto-plaçant est, en outre, auto-nivelant.

11. Conteneur de déchet radioactif, réalisé dans un matériau confinant spécifiquement adapté pour la mise en oeuvre du procédé selon l'une des revendications précédentes, **caractérisé en ce que** le matériau confinant est, en outre, auto-plaçant.

12. Conteneur selon la revendication 11, **caractérisé en ce qu'**il comporte un volume externe d'au moins 8 m³, et **en ce que** le matériau confinant est un béton armé et/ou renforcé.

13. Matrice cimentaire, adaptée spécifiquement en tant que matériau auto-plaçant pour la mise en oeuvre de l'étape b) du procédé selon l'une des revendications 1 à 10, comportant un matériau de remplissage de granulométrie plus fine que le ciment de la matrice pour conférer à la matrice cimentaire un caractère auto-plaçant, **caractérisée en ce qu'**elle forme un béton confinant et auto-plaçant comportant une composition du type, en kg/m³ et dans des plages respectives de plus ou moins 5% :
- sable 0/4 : 930,
- graviers-gravillons 4/8 : 720,
- ciment : 400,
- matériau de remplissage calcaire : 220,
- fumées de silice : 40,
- eau : 140 litres.

14. Matrice cimentaire selon la revendication 13, **caractérisée en ce que** la composition du béton comporte en outre, en kg/m³ et dans des plages respectives de plus ou moins 5% :
- un agent plastifiant : 8,5, et
- un agent de viscosité ou de cohésion : 1,2.

15. Matrice cimentaire, adaptée spécifiquement en tant que matériau auto-plaçant pour la mise en oeuvre de l'étape b) du procédé selon l'une des revendications 1 à 10, et comportant un matériau de remplissage de granulométrie plus fine que le ciment de la matrice pour conférer à la matrice cimentaire un caractère auto-plaçant, **caractérisée en ce qu'**elle forme un mortier confinant et auto-plaçant comportant une composition du type, en kg/m³ et dans des plages respectives de plus ou moins 5% :
- sable 0/4 : 1115,
- ciment : 400,
- matériau de remplissage calcaire : 400,
- fumées de silice : 80,
- eau : 250 litres.

16. Matrice cimentaire selon la revendication 15, **caractérisée en ce que** la composition de la matrice cimentaire comporte en outre, en kg/m³ et dans des plages respectives de plus ou moins 5% :
- un agent plastifiant : 7,4, et
- un agent de viscosité ou de cohésion : 2,5.

17. Matrice selon l'une des revendications 15 et 16, **caractérisée en ce que** le mortier forme un matériau d'immobilisation de déchet dans le procédé selon l'une des revendications 5 à 10.

18. Installation pour la mise en oeuvre du procédé selon l'une des revendications 5 à 10, **caractérisée en ce qu'**elle comporte :
- des moyens d'acheminement du déchet dans un panier sensiblement au centre du conteneur,
- des moyens automatisés de coulée d'un matériau d'immobilisation auto-plaçant dans le conteneur pendant une durée prédéterminée et avec au moins une durée d'attente de prise prédéterminée, et
- des moyens automatisés de coulée d'un bouchon fermant le conteneur, pendant une durée prédéterminée et avec au moins une durée d'attente de prise prédéterminée.

19. Installation selon la revendication 18, **caractérisée en ce qu'**elle comporte en outre des moyens de contrôle dosimétrique et de contamination surfacique sur un colis sensiblement parallélépipédique.

## Patentansprüche

1. Verfahren zur Behandlung von radioaktivem Abfall, das folgende Schritte umfasst:
a) Einbringen des Abfalls im Wesentlichen in der Mitte eines Behälters, der aus einem Material gefertigt ist, das Radionuklide einschließt, und
b) Gießen eines Materials, das Radionuklide einschließt und in dem Behälter aushärtet, **dadurch gekennzeichnet, dass** das Verfahren, da der radioaktive Abfall strahlt, ferngesteuert ist, und dadurch, dass das aushärtende Material aus Schritt b) selbstverdichtend ist.

2. Verfahren nach Anspruch 1, **dadurch gekennzeichnet, dass** das in Schritt b) gegossene und im Behälter ausgehärtete Material einen Verschluss des Behälters aufweist, und dadurch, dass der Behälter im Wesentlichen aus ein und demselben Material wie der Verschluss gefertigt ist.

3. Verfahren nach Anspruch 2, **dadurch gekennzeichnet, dass** das Material des Behälters und des Verschlusses einschließender, selbstverdichtender Beton ist.

4. Verfahren nach Anspruch 3, **dadurch gekennzeichnet, dass** der Beton verstärkt wird.

5. Verfahren nach einem der vorhergehenden Ansprüche, **dadurch gekennzeichnet, dass** das in Schritt b) gegossene und in dem Behälter ausgehärtete Material ein selbstverdichtendes Fixierungsmaterial für den Abfall aufweist.

6. Verfahren nach Anspruch 5, in Verbindung mit Anspruch 4, **dadurch gekennzeichnet, dass** Schritt b) folgende Vorgänge umfasst:
b1) Gießen des selbstverdichtenden Fixierungsmaterials für den Abfall in den Behälter,
b2) Anordnen einer Bewehrungseinlage über dem Fixierungsmaterial in dem Behälter,
b3) Gießen des Betons in die Bewehrungseinlage.

7. Verfahren nach Anspruch 5 oder 6, **dadurch gekennzeichnet, dass** es folgende Vorgänge umfasst:
- Vorsehen einer Auftriebssicherungsvorrichtung für den Abfall in dem Behälter,
- Schritt a) zum Einbringen des Abfalls in den Behälter,
- Einbringen der Auftriebssicherungsvorrichtung in den Behälter auf einer Höhe, die so ausgewählt ist, dass sie ein begrenztes Aufsteigen des Abfalls im Behälter durch Auftrieb während des Vorgangs des Gießens des Fixierungsmaterials für den Abfall in den Behälter zulässt, und
- Gießen des selbstverdichtenden Fixierungsmaterials für den Abfall in den Behälter.

8. Verfahren nach Anspruch 5 oder 6, **dadurch gekennzeichnet, dass** es folgende Vorgänge umfasst:
- Anwenden von Schritt a) zum Einbringen des Abfalls in den Behälter,
- Durchführen eines ersten Gießvorgangs mit dem selbstverdichtenden Fixierungsmaterial zum zumindest teilweisen Untertauchen des Abfalls,
- nach dem Abbinden der ersten Gießmasse des Fixierungsmaterials Durchführen eines zweiten Gießvorgangs mit dem Fixierungsmaterial zum Untertauchen des Abfalls.

9. Verfahren nach einem der Ansprüche 5 bis 8, **dadurch gekennzeichnet, dass** das selbstverdichtende Fixierungsmaterial ein Radionuklide einschließender Mörtel ist.

10. Verfahren nach einem der Ansprüche 5 bis 9, **dadurch gekennzeichnet, dass** das selbstverdichtende Fixierungsmaterial ferner selbstnivellierend ist.

11. Behälter für radioaktiven Abfall, der aus einem einschließenden Material gefertigt ist, das besonders für die Durchführung des Verfahrens nach einem der vorhergehenden Ansprüche geeignet ist, **dadurch gekennzeichnet, dass** das einschließende Material ferner selbstverdichtend ist.

12. Behälter nach Anspruch 11, **dadurch gekennzeichnet, dass** er ein Außenvolumen von mindestens 8 m³ aufweist, und dadurch, dass das einschließende Material ein Stahlbeton und/oder verstärkter Beton ist.

13. Zementmatrix, die besonders als selbstverdichtendes Material für die Durchführung von Schritt b) des Verfahrens nach einem der Ansprüche 1 bis 10 geeignet ist und ein Füllmaterial mit geringerer Korngröße als der Zement der Matrix aufweist, damit der Zementmatrix eine selbstverdichtende Eigenschaft verliehen wird, **dadurch gekennzeichnet, dass** sie einen einschließenden und selbstverdichtenden Beton bildet, der eine Zusammensetzung folgender Art aufweist, in kg/m³ und in einem jeweiligen Bereich von plus minus 5%:
- Sand 0/4: 930,
- Kies-Splitt 4/8: 720,
- Zement: 400,
- kalkhaltiges Füllmaterial: 220,
- Silikastaub: 40,
- Wasser: 140 Liter.

14. Zementmatrix nach Anspruch 13, **dadurch gekennzeichnet, dass** die Zusammensetzung des Betons ferner, in kg/m³ und in einem jeweiligen Bereich von plus minus 5%, Folgendes umfasst:
- einen Verflüssiger: 8,5 und
- ein Viskositätserhöhungs- oder Bindemittel : 1,2.

15. Zementmatrix, die besonders als selbstverdichtendes Material für die Durchführung von Schritt b) des Verfahrens nach einem der Ansprüche 1 bis 10 geeignet ist und ein Füllmaterial mit geringerer Korngröße als der Zement der Matrix aufweist, damit der Zementmatrix eine selbstverdichtende Eigenschaft verliehen wird, **dadurch gekennzeichnet, dass** sie einen einschließenden und selbstverdichtenden Mörtel bildet, der eine Zusammensetzung folgender Art aufweist, in kg/m3 und in einem jeweiligen Bereich von plus minus 5%:
- Sand 0/4: 1115,
- Zement: 400,
- kalkhaltiges Füllmaterial: 400,
- Silikastaub: 80,
- Wasser: 250 Liter.

16. Zementmatrix nach Anspruch 15, **dadurch gekennzeichnet, dass** die Zusammensetzung der Zementmatrix ferner, in kg/m³ und in einem jeweiligen Bereich von plus minus 5%, Folgendes umfasst:
- einen Verflüssiger: 7,4 und
- ein Viskositätserhöhungs- oder Bindemittel: 2,5.

17. Matrix nach Anspruch 15 oder 16, **dadurch gekennzeichnet, dass** der Mörtel ein Fixierungsmaterial für den Abfall in dem Verfahren nach einem der Ansprüche 5 bis 10 bildet.

18. Einrichtung zur Durchführung des Verfahrens nach einem der Ansprüche 5 bis 10, **dadurch gekennzeichnet, dass** sie Folgendes umfasst:
- Mittel zum Leiten des Abfalls in einen Korb im Wesentlichen in der Mitte des Behälters,
- automatisierte Mittel zum Gießen eines selbstverdichtenden Fixierungsmaterials in den Behälter während einer vorher festgelegten Dauer und mit mindestens einer vorher festgelegten Warte- und Abbindezeit, und
- automatisierte Mittel zum Gießen eines den Behälter verschließenden Verschlusses während einer vorher festgelegten Dauer und mit mindestens einer vorher festgelegten Warte- und Abbindezeit.

19. Einrichtung nach Anspruch 18, **dadurch gekennzeichnet, dass** sie ferner Mittel zur dosimetrischen Überwachung und Überwachung der Oberflächenkontamination an einem im Wesentlichen als Parallelepiped geformten Gebinde aufweist.

## Claims

1. A method of processing radioactive waste, comprising the steps of:
a) placing the waste substantially at the centre of a container made of a material that confines radionuclides, and
b) casting a hardening material that confines radionuclides into the container, **characterized in that**, the radioactive waste being dosing, the method is remotely operated, and **in that** the hardening material of step b) is self-compacting.

2. A method according to claim 1, **characterized in that** the material cast in step b) and hardened in the container comprises a plug of the container, and **in that** the container is made substantially from the same material as the cap.

3. A method according to claim 2, **characterized in that** the container and the cap material is confining, self-compacting concrete.

4. A method according to claim 3, **characterized in that** said concrete is reinforced.

5. A method according to one of the preceding claims, **characterized in that** the cast material in step b) and hardened in the container comprises a self-compacting material that immobilizes the waste.

6. A method according to claim 5, taken in combination with claim 4, **characterized in that** step b) comprises the operations:
b1) casting the self-compacting, waste immobilizing material in the container,
b2) providing a reinforcing frame above the immobilizing material in the container,
b3) casting the concrete in the reinforcement frame thereof.

7. A method according to one of claims 5 and 6, **characterized in that** it comprises the operations of:
- providing an anti-flotation device for the waste in the container,
- step a) placement of the waste in the container,
- placing the anti-floatation device in the container at a height chosen to allow limited raising by flotation of the waste in the container, during the operation of casting the waste immobilizing material into the container, and
- pouring the self-compacting, waste immobilizing material into the container.

8. A method according to one of claims 5 and 6, **characterized in that** it comprises the operations of:
- applying step a) of placing the waste into the container,
- applying a first casting of self-compacting, waste immobilizing material at least partially submerging the waste,
- after the first casting of immobilizing material has set, applying a second casting of immobilizing material to submerge the waste.

9. A method according to one of claims 5 to 8, **characterized in that** the self-compacting, immobilizing material is a mortar that confines radionuclides.

10. A method according to one of claims 5 to 9, **characterized in that** the self-compacting, immobilizing material is also self-levelling.

11. A container for radioactive waste, made of a confining material for carrying out the method according to one of the preceding claims, **characterized in that** the confining material is, furthermore, self-compacting.

12. A container according to claim 11, **characterized in that** it comprises an outer volume of at least 8 m³ and **in that** the confining material is armoured and/or reinforced concrete.

13. A cementitious matrix, adapted specifically as a self-compacting material for the implementation of step b) of the method according to one of claims 1 to 10, comprising a filler material that is more fine-grained than the cement of the matrix in order to make the cementitious matrix self-compacting, **characterized in that** it forms confining and self-compacting concrete comprising a composition, in kg/m³ and in the respective ranges of plus or minus 5%, of the type of:
- sand 0/4: 930,
- gravel-chippings 4/8: 720,
- cement: 400,
- limestone filler: 220,
- silica fume: 40,
- water: 140 litres.

14. A cementitious matrix of claim 13, **characterized in that** the composition of the concrete, in kg/m³ and in the respective ranges of plus or minus 5%, further comprises:
- a plasticizer: 8.5, and
- a viscosity or cohesion agent: 1.2.

15. A cementitious matrix, adapted specifically as a self-compacting material for the implementation of step b) of the method according to one of claims 1 to 10, comprising a filler material that is more fine-grained than the cement of the matrix in order to make the cementitious matrix self-compacting, **characterized in that** it forms confining and self-compacting mortar comprising a composition, in kg/m³ and in the respective ranges of plus or minus 5%, of the type of:
- sand 0/4: 1115,
- cement: 400,
- limestone filler: 400,
- silica fume: 80,
- water: 250 litres.

16. A cementitious matrix of claim 15, **characterized in that** the composition of the cementitious matrix, in kg/m³ and in the respective ranges of plus or minus 5%, further comprises:
- a plasticizer: 7.4, and
- a viscosity or cohesion agent: 2.5.

17. A matrix according to one of claims 15 and 16, **characterized in that** the mortar forms a waste immobilizing material in the method according to one of claims 5 to 10.

18. An installation for carrying out the method according to one of claims 5 to 10, **characterized in that** it comprises:
- means for conveying the waste into a basket at substantially the centre of the container,
- automated means for casting an immobilizing material into the container for a predetermined time and with at least one predetermined set waiting time, and
- automated means for casting a plug for closing the container for a predetermined time and with at least one predetermined set waiting time.

19. Installation according to claim 18, **characterized in that** it further comprises dosimetric and surface contamination control means on a substantially parallelepipedic package.
